# DEMANDE DE BREVET EUROPEEN

(11) **EP 0 667 511 A1**
(43) Date de publication de la demande: **16.08.1995**
(21) Numéro de dépôt: 95400257.2
(22) Date de dépôt: 08.02.1995
(51) Int. Cl.: G01F 23/00, F02B 77/08, F02M 37/14

(54) **Système de pompage et d'indication de niveau et/ou de volume de carburant sur véhicule automobile**

(30) Priorité: 10.02.1994 FR 9401504
(71) Demandeur: MARWAL SYSTEMS, F-92000 Nanterre (FR)
(72) Inventeur: Bense, Guy, F-92150 Suresnes (FR); Catabelle, Jean-Marie, F-75116 Paris (FR); Denneulin, Denis, F-75004 Paris (FR)
(74) Mandataire: Texier, Christian

(57) **Abrégé**

La présente invention concerne un système de pompage et d'indication de niveau et/ou volume de carburant dans un réservoir de véhicule automobile comprenant : une pompe électrique (10), des moyens (12) de commande d'alimentation électrique de la pompe (10), un capteur (20) de niveau de carburant, un indicateur (22) de niveau de carburant, et un module (24) électronique assurant une fonction d'amortisseur, intercalé entre la sortie (21) du capteur (20) et l'entrée (23) de l'indicateur (22), caractérisé par le fait que : le module (24) assurant la fonction amortisseur est alimenté par la sortie +U des moyens de commande d'alimentation électrique (12) de la pompe (10) et, il est prévu un contact électrique (40) apte à court-circuiter le module (24) assurant la fonction amortisseur quand la pompe (10) n'est pas alimentée par les moyens de commande (12).

## Description

La présente invention concerne le domaine des systèmes de pompage de carburant dans un réservoir de véhicule automobile et d'indication du niveau et/ou du volume de carburant dans ce réservoir.

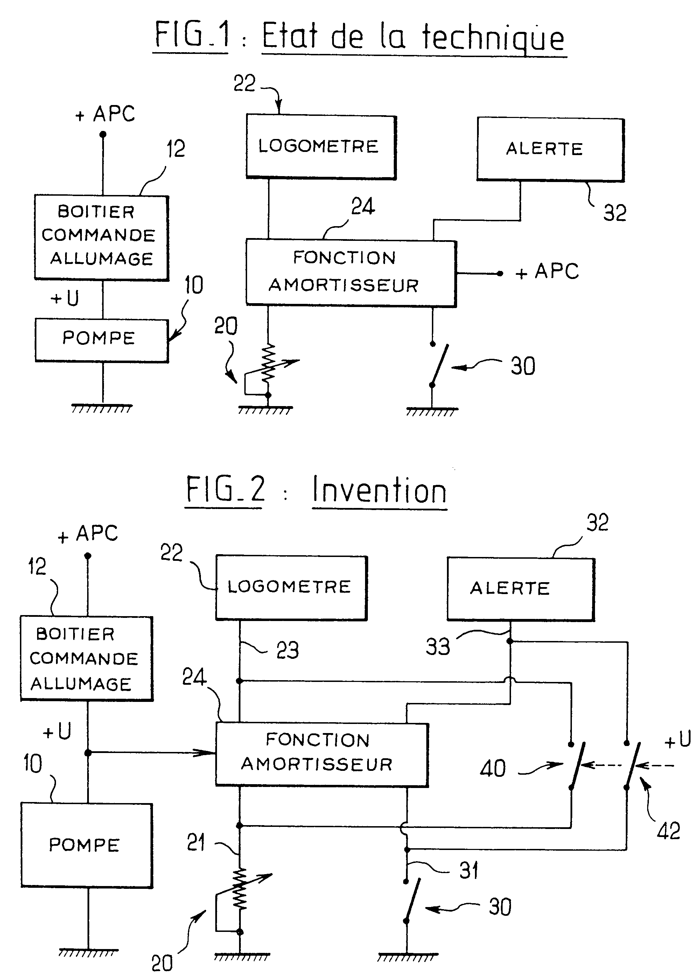

On a déjà proposé de nombreux dispositifs de puisage et d'indication de niveau pour carburant, sur vehicule automobile, du type représenté sur la figure 1 annexée.

Ces systèmes comprennent une pompe 10 dont le conduit d'aspiration plonge dans le réservoir de carburant, par exemple au niveau d'un bol de réserve placé dans celui-ci.

Cette pompe 10 est alimentée entre une borne de masse et une borne positive dite +APC (pour + après contact). Plus précisément, généralement, ces pompes 10 sont alimentées par l'intermédiaire d'un boîtier de commande d'allumage 12 intercalé entre la pompe 10 et la borne positive +APC.

La borne +APC correspond à la borne d'alimentation positive du véhicule prélevée après l'interrupteur de commande générale actionné par la clef de contact.

Le boîtier de commande d'allumage 12 a pour fonction d'interrompre l'alimentation de la pompe 10 si le moteur n'a pas démarré après un délai prédéterminé consécutif à l'actionnement par la clef de contact, par exemple après quelques centaines de millisecondes, typiquement après un temps inférieur à une seconde. La tension de sortie de ce boîtier 12, appliquée à la pompe 10, est référencée +U.

Par ailleurs, comme on le voit sur la figure 1 annexée, les systèmes classiques comprennent généralement un capteur résistif 20 dont la résistance de sortie est fonction du niveau et/ou du volume de carburant dans le réservoir du véhicule. Ces capteurs 20 comprennent généralement une piste résistive et un curseur associé, agencés en capteur de type rhéostatique, lequel curseur est actionné par un flotteur qui suit le niveau de carburant.

L'information de niveau issue du capteur 20 est visualisée sur un indicateur 22, par exemple un logomètre.

L'homme de l'art sait cependant que le niveau de carburant d'un réservoir de véhicule automobile est très sensible aux accélérations/décélérations de ce dernier.

Par conséquent, on a imaginé différents moyens pour éviter que ces fluctuations intempestives du niveau de liquide jaugé ne se traduisent par des oscillations de l'indication délivrée par l'indicateur 22.

Pour cela, on a proposé par exemple des dispositifs opérant un amortissement mécanique sur le capteur à flotteur 20.

On a également proposé, et ces systèmes semblent préférés de nos jours, de réaliser un amortissement électrique du signal issu du capteur 20, à l'aide d'un boîtier électronique 24 intercalé entre la sortie du capteur 20 et l'entrée de l'indicateur 22.

Enfin, comme on l'a illustré sur la figure 1, les systèmes indicateurs connus comprennent généralement un contact d'alerte 30 actionné lorsque le niveau de carburant dans le réservoir tombe sous un seuil prédéterminé, et un témoin d'alerte 32 activé par ce contact 30.

De nos jours, comme on le voit sur la figure 1, le boîtier assurant la fonction amortisseur 24 est alimenté par la borne positive +APC.

La présente invention a maintenant pour but de perfectionner les systèmes de jaugeage et d'indication de carburant connus.

Un but important de l'invention est de permettre l'indication quasi-instantanée de l'état du niveau de carburant dans le réservoir, à la mise sous tension du +APC, y compris pour la tension d'alerte.

L'invention vise en particulier à améliorer l'indication après remplissage du réservoir de carburant.

Ce but est atteint dans le cadre de la présente invention, grâce à un système de pompage et d'indication de niveau et/ou volume de carburant dans un réservoir de véhicule automobile, comprenant :
- une pompe électrique,
- des moyens de commande d'alimentation électrique de la pompe,
- un capteur de niveau de carburant,
- un indicateur de niveau de carburant, et
- un module électronique assurant une fonction amortisseur, intercalé entre le capteur de niveau et l'indicateur de niveau,
   caractérisé par le fait que:
- le module assurant la fonction amortisseur est alimenté par la sortie des moyens de commande d'alimentation électrique de la pompe, et
- il est prévu un contact électrique en parallèle du module électronique assurant la fonction amortisseur, apte à court-circuiter celui-ci, quand la pompe n'est pas alimentée par les moyens de commande.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 précédemment décrite représente schématiquement, sous forme de blocs fonctionnels, un système de pompage et d'indication de niveau de carburant conforme à l'état de la technique, et
- la figure 2 illustre schématiquement, sous forme de blocs fonctionnels, un système conforme à la présente invention.

On retrouve sur la figure 2 annexée, une pompe 10 alimentée par l'intermédiaire de moyens de commande 12 entre la masse et une borne d'alimentation positive +APC.

On retrouve également sur la figure 2 un capteur résistif 20 associé à un module électronique assurant la fonction d'amortisseur 24 et un indicateur par exemple de type logométrique 22, ainsi qu'un contact d'alerte 30 associé à un témoin d'alerte 32.

Comme on l'a indiqué précédemment, selon l'invention, le module 24 assurant la fonction d'amortisseur sur le signal appliqué à l'indicateur 22 est alimenté par la sortie +U des moyens de commande d'alimentation électrique 12 de la pompe 10.

Par ailleurs, il est prévu un contact électrique 40 en parallèle du module amortisseur 24, soit entre la sortie 21 du capteur 20 et l'entrée 23 de l'indicateur 22. Ce contact 40 est commandé par la tension +U issue des moyens de commande 12, de sorte que le contact 40 court-circuite le module 24 assurant la fonction d'amortisseur quand la pompe 10 n'est pas alimentée par les moyens de commande 12.

En pratique, le contact 40 est formé avantageusement d'un relais piloté par la tension +U de sorte qu'il soit ouvert lorsque la pompe 10 est alimentée par les moyens de commande 12.

Comme on le voit sur la figure 2, selon l'invention il est également prévu de préférence un second contact 42, en parallèle de la fonction amortisseur 24, entre la sortie 31du contact d'alerte 30 et l'entrée 33 du témoin d'alerte 32. Le second contact 42 est également piloté par la tension +U de sortie des moyens de commande 12 pour court-circuiter la fonction d'amortissement sur l'alerte quand la pompe 10 n'est pas alimentée.

Là encore le second contact 42 peut être formé d'un relais piloté par la tension +U, à l'état ouvert lorsque la pompe 10 est alimentée.

La structure proposée dans le cadre de la présente invention permet, en utilisant la borne de sortie du boîtier de commande 12, pour l'alimentation de la fonction amortisseur 24, de réduire le nombre de conducteurs à prévoir dans les faisceaux de câbles sur le véhicule, en particulier permet d'éviter l'apport de la borne positive +APC sur la fonction amortisseur 24, tout en paliant les aléas d'interruption d'alimentation de la pompe 10 en cas de déficience au démarrage du moteur.

Le fonctionnement du système conforme à la présente invention est essentiellement le suivant.

Lors de l'actionnement de la clef de contact, le réseau de bord du véhicule est mis sous tension c'est-à-dire qu'une tension apparaît sur la borne d'alimentation générale +APC. La pompe de carburant 10 est alors alimentée par l'intermédiaire des moyens de commande 12.

Si le moteur démarre normalement, la pompe 10 assure son rôle de pompage. La fonction amortisseur 24 assure également son rôle de lissage des informations appliquées aux indicateurs 22 et 32, les contacts parallèles 40 et 42 étant maintenus dans ce cas à l'état ouvert.

En revanche, si le moteur ne démarre pas, au bout d'une temporisation prédéterminée, typiquement de l'ordre de quelques centaines de millisecondes, voire quelques secondes, par exemple 2 secondes, les moyens de commande 12 interrompent l'alimentation de la pompe 10. La tension +U disparaît par conséquent. Le module 24 assurant la fonction amortisseur ne peut plus remplir son rôle puisqu'il n'est plus alimenté.

Cependant, dans ce cas les contacts 40 et 42 passent automatiquement à l'état fermé en raison de l'interruption de la tension +U et par conséquent l'indicateur 22 continue à étre alimenté par le capteur 20, par l'intermédiaire du contact 40, tandis que le témoin d'alerte 32 continue à être commandé par le contact d'alerte 30 par l'intermédiaire du contact 42.

Bien entendu la présente invention n'est pas limitée au mode de réalisation particulier qui vient d'être décrit mais s'étend à toute variante conforme à son esprit. En particulier, les contacts 40, 42 peuvent être formés de tous moyens équivalents à des relais, par exemple des interrupteurs électroniques.

## Revendications

1. Système de pompage et d'indication de niveau et/ou volume de carburant dans un réservoir de véhicule automobile comprenant :
- une pompe électrique (10),
- des moyens (12) de commande d'alimentation électrique de la pompe (10),
- un capteur (20) de niveau de carburant,
- un indicateur (22) de niveau de carburant, et
- un module (24) électronique assurant une fonction d'amortisseur, intercalé entre la sortie (21) du capteur (20) et l'entrée (23) de l'indicateur (22),
caractérisé par le fait que :
- le module (24) assurant la fonction amortisseur est alimenté par la sortie +U des moyens de commande d'alimentation électrique (12) de la pompe (10) et,
- il est prévu un contact électrique (40) apte à court-circuiter le module (24) assurant la fonction amortisseur quand la pompe (10) n'est pas alimentée par les moyens de commande (12).

2. Système selon la revendication 1 du type comprenant également un contact d'alerte (30) apte à commander un témoin d'alerte (32) lorsque le niveau et/ou volume de carburant tombe sous un seuil prédéterminé, caractérisé par le fait qu'il comprend en outre un contact électrique (42) apte à relier directement la sortie du contact d'alerte (30) et l'entrée (33) du témoin d'alerte (32) quand la pompe (10) n'est pas alimentée par les moyens de commande (12).

3. Système selon l'une des revendications 1 ou 2, caractérisé par le fait que les contacts (40, 42) assurant un court-circuit du module amortisseur (24) lorsque la pompe (10) n'est pas alimentée, sont formés de relais.

4. Système selon l'une des revendications 1 ou 2, caractérisé par le fait que les contacts (40, 42) assurant un court-circuit du module amortisseur (24) lorsque la pompe (10) n'est pas alimentée, sont formés d'interrupteurs électroniques.

5. Système selon l'une des revendications 1 à 4, caractérisé par le fait que les moyens de commande (12) d'alimentation électrique de la pompe (10) sont sensibles au démarrage du moteur, pour interrompre l'alimentation de la pompe lorsque le moteur ne démarre pas après une temporisation prédéterminée.

6. Système selon la revendication 5, caractérisé par le fait que la temporisation est de l'ordre de quelques centaines de millisecondes à quelques secondes, par exemple deux secondes.
